# EUROPEAN PATENT APPLICATION

(11) **EP 1 583 049 A1**
(43) Date of publication of application: **05.10.2005**
(21) Application number: 05252097.0
(22) Date of filing: 04.04.2005
(51) Int. Cl.: G07F 1/04

(54) **Coin stabilization device and coin receiving apparatus**

(30) Priority: 02.04.2004 GB 0407592
(71) Applicant: Panzeri, Ezio, 20156 Milan (IT)
(72) Inventor: Panzeri, Ezio, 20156 Milan (IT)
(74) Representative: Hall, Matthew Benjamin

(57) **Abstract**

The invention concerns a device for receiving coins comprising a coin path 7, a wall 8, and a hanging mass 1, the hanging mass 1 having a pivot 2 with an axis arranged substantially parallel to the wall. Gravity is used to bias the hanging mass 1 toward the wall 8, and thus a coin travelling along the coin path 7 is deflected into the desired stable path by the mass 1 without the need for external driving forces. The pivot 2 is clear of the coin path 7 and thus avoids the majority of dirt, leading to a more reliable operation.

## Description

The present invention relates to a coin stabilization device and coin receiving apparatus, for example, for use in coin validation systems and the like.

Coin validation systems are widely used for different applications, for instance in vending machines, public telephones, gas and electricity meters and so on. A coin receiving apparatus is required within the validation system to receive coins and stabilise them in order to allow a sensor to reliably sense and validate the coin. Many such systems are susceptible to fraud via the insertion of a coin attached to a string or similar, and the subsequent removal of the coin after it has been registered by the coin validation system. Furthermore a dirty operating environment created by the ingress of dirt and other substances via the coins or otherwise may inhibit the operation of coin receiving systems by obstructing the motion of moving parts.

EP 0500366 discloses a coin receiving device comprising an inclined cage housing a ball arranged to impinge on a coin as it is arrested, and thus bring the coin to a halt quickly to allow validation of the coin.

EP 0774146 discloses a coin validation system including a coin path and round mass, such as a ball which is supported to project into the coin path, for example by an inclined cage. A heavy coin striking the upper region of the mass causes it to be pushed back out of the coin path, absorbing the kinetic energy of the coin and deflecting the coin to be flat against the wall of the coin path thus allowing a sensor to sense and validate the coin. Hence this device stabilises coins without requiring them to be arrested as in the previous disclosure. In order to deal with thin light coins the mass does not extend fully across the coin path, and so a thin light coin does not move it and can pass through the gap between the mass and the wall.

A problem with this known device is that the accumulation of dirt and similar on the ball will inhibit rotation of the ball and it may become stiff, thus preventing lighter coins from pushing the ball out of the coin path. Further dirt may cause the ball to become stuck either in a position obstructing the coin path and trapping coins, or in a position leaving the coin path open and preventing reliable stabilisation of coins. It is also recognised that the prior art cited above does not prevent fraudulent withdrawal of coins after validation, as coins may pass back through the coin receiving device. Furthermore the prior art does not provide a way of fully stabilising coins of all weights whilst they are in motion, as a gap is left for light coins allowing the possibility of them passing along the coin path unaffected by the ball.

Accordingly it is an object of at least the preferred embodiments of the present invention to solve all the above mentioned problems using a mechanical system, and provide a coin receiving device which prevents fraudulent withdrawal of coins, is resistant to the effects of a dirty operating environment and effectively stabilises coins of all weights and sizes.

From a first aspect of the present invention there is provided a device for receiving coins comprising a coin path, a wall, and a hanging mass, the hanging mass having a pivot with an axis arranged substantially parallel to the wall.

In the above aspect, gravity is used to bias the hanging mass toward the wall as the pivot is horizontal during use, and thus a coin travelling along the coin path is deflected into the desired stable path by the mass without the need for external driving forces. The pivot is clear of the coin path and thus avoids the majority of dirt, leading to a more reliable operation. If necessary additional biasing means may be used to aid gravity, for instance a spring but preferably this is avoided to simplify the mechanism.

The pivot may be shielded from the coin path to aid in preventing build up of dirt around the pivot.

The wall may be a flat surface, or a curved surface, and the surface may be solid, or it may be perforated, in the case of a perforated surface the wall may consist of rails or wires. Preferably the wall is a solid, flat surface which forms part of a track for the coin.

In a preferred embodiment the hanging mass has a profile including a coin deflecting portion on an upper side and a coin retaining member on a lower side.

In this embodiment coins are deflected efficiently by the deflecting portion, which removes kinetic energy from the coins and guides the coins into the desired position. Additionally coins are prevented from being fraudulently withdrawn from the coin receiving device by the coin retaining member.

The hanging mass may have a constant cross-sectional shape or a varying cross-sectional shape, or it may have rotational symmetry. The hanging mass may be solid, or it may be advantageous to change its mass by having a hollow portion.

In a preferred embodiment the deflecting portion is an inclined plane.

In this embodiment the shape of the deflecting portion is simple to manufacture.

The inclined plane may extend down the profile of the hanging mass and join with the coin retaining member. More preferably the inclined plane extends down only a part of the hanging mass.

In an alternative preferred embodiment the deflecting portion has a curved shape.

Conveniently, a curved shape allows the hanging mass to react differently to a coin depending on the distance of the coin from the wall, as the angle of the deflecting portion to the vertical can vary. Thus a thicker coin, which is likely to be heavier, and therefore travelling with more momentum, will have to use a greater force to displace the hanging mass.

In a preferred embodiment the curved shape includes a portion of a sphere.

Articles of spherical shape are readily available and therefore the above embodiment conveniently combines the advantages of a curved shape, with ease of manufacture.

The curved shape may include a hemi-sphere, or it may be an entire sphere. The spherical shape may conveniently be provided by a ball such as a ball bearing or similar.

In a preferred embodiment the hanging mass includes a frame and an embedded mass.

This embodiment allows different materials to be used in the manufacture of the hanging mass. Materials that may be useful for the frame, which could be a complex shape, might not be useful for supplying the necessary mass to allow the device to function effectively. Hence a frame with an embedded mass removes constraints on the frame material, allowing greater freedom of choice in matters such as the method of manufacture, and in using materials with other desirable properties.

In a preferred embodiment the embedded mass includes the coin deflecting portion, and the frame includes the pivot and the coin retaining portion.

Conveniently, materials useful in supplying mass may have properties useful for the deflecting portion, and materials that are advantageous for the frame may have properties useful for the pivot and the coin retaining portion.

The deflecting portion, for example, has to withstand repeated impacts from coins and so requires a material having a hard surface layer if it is to avoid wear. For the frame, it may be more important to have a material that can be moulded easily, and if the pivot is integral with the frame, then to have a material with low surface friction or with self-lubricating properties would be advantageous. The coin retaining portion could also be made of a different material to the pivot, for example, a toughened or harder material to resist the force of a coin being retracted from the device.

In a preferred embodiment the hanging mass or at least the frame is manufactured from a low friction material.

Low friction materials allow ease of movement, for instance sliding of coins past the hanging mass, and rotation of the pivot. If the pivot is integral in the frame then a low friction material used for the frame will be advantageous in pivot performance.

The low friction material used could be Teflon® (polytetrafluoroethylene), Pom (polyoxymethylene) or Nylon. Such materials are known for their natural resistance to stresses, chemical agents and thermal changes, and can work well without lubrication. These properties lead to a system which works reliably, copes well in a dirty environment, and requires minimal maintenance.

In a preferred embodiment the coin deflecting portion is manufactured from a wear resistant material.

Wear resistance is desirable, as this will increase the working life of the part. Contact with coins will increase the wear of the coin deflecting portion as compared to other elements of the system.

The wear resistant material may be a metal, such as a steel. If the coin deflecting portion is the embedded mass then a convenient solution is the use of a ball bearing. In the case of a spherical element like a ball bearing the hanging mass may be arranged so as to allow the embedded ball to be rotated within the frame and thus present a different area to be the main point of wear and prolong the life of the hanging mass.

In a preferred embodiment there is a hanging mass on either side of a centre line of the coin path.

Multiple hanging masses increase the reliability, as if the action of one is impaired, the remaining hanging mass or masses will ensure that the coin is stabilised and prevented from being fraudulently withdrawn. If a string or similar attached to the coin is being used then it is likely to be on or near the centre line of the coin path and so the device will prevent fraudulent withdrawal, as the operation of hanging masses on either side of the string will not be affected by the string.

The masses may be arranged to be across the coin path, or they may be along the line of the coin path, the positioning of the masses can be used to vary the effect on the deflection of the coin. The masses may be of different shapes or sizes. Some of the hanging masses may have a function relating only to preventing fraudulent withdrawal of coins, or relating only to stabilising the coin.

In a preferred embodiment there are two hanging masses.

The use of two hanging masses provides the advantages associated with multiple hanging masses, whilst keeping the number of components to a minimum and thus reducing costs and increasing the ease of manufacture.

From a second aspect the present invention provides a coin stabilisation device for use in a coin receiving apparatus in which a coin travels along a coin path, the coin stabilisation device comprising a mass arranged to engage a face of a coin as the coin travels along the coin path in order to urge the coin into contact with a guide surface of the coin path, wherein the mass is suspended from a pivot and is displaceable about the pivot to allow the coin to continue along the coin path.

This second aspect may be combined advantageously with any of the features of the first aspect described above.

From a third aspect the present invention provides a hanging mass having a pivot. The hanging mass preferably has a spherical body portion which is retained within a frame. The frame preferably includes two lugs which extend in opposite directions and provide bearing surfaces to form the pivot. The body portion is arranged within the frame so as to be suspended from the pivot in use. The frame preferably comprises a ring of material that extends around the spherical body portion in a plane that is parallel to and includes the pivot axis. The frame preferably includes a blocking member presenting a surface which extends in a direction substantially orthogonal to the pivot axis and the plane of the ring-like frame. Preferably the blocking member extends a distance from the plane of the ring-like frame which is equal or close to the radius of the hanging mass.

This third aspect may be combined with any of the features of the hanging mass as described in the embodiments above.

In the third aspect a wall or guide path as described in previous aspects may be included as part of a system in which the hanging mass is a component.

From a fourth aspect the present invention provides a hanging mass having a coin blocking member, the hanging mass also acting as a coin stabilisation device.

The coin blocking member, also referred to herein as a coin retaining member, serves to prevent the return of a coin by fraudulent means

The term "coin" as used herein refers also to tokens and any such disc-like element that might be used in systems of a similar nature to coin validation systems or coin operated devices.

A preferred embodiment of the present invention will now be described by way of example only and with reference to the accompanying drawings in which:
Fig.1 shows a hanging mass of the type described in some preferred embodiments of the prevent invention.
Fig.2 shows a side cross section of part of a coin validation system included in an embodiment of a coin receiving device.
Fig.3 shows a front perspective view of hanging masses in an embodiment of part of a coin receiving device.
Fig.4 shows a back perspective view corresponding to the view of fig.3.
Fig.5 shows a front view of an embodiment of a coin receiving device with hanging masses on either side of the centre of the coin path.
Fig.6 shows a hanging mass being used in a seat belt application.

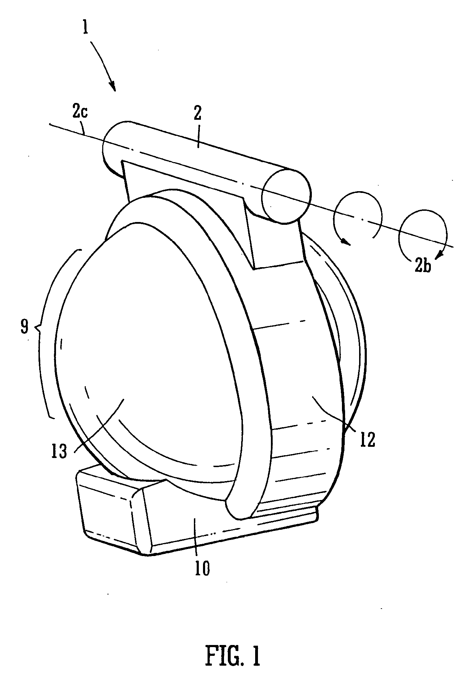

Fig.1 shows an embodiment of a hanging mass 1 including a pivot 2. The pivot 2 allows the hanging mass 1 to swing in a first direction, e.g. anti-clockwise 2a, and in a second direction, e.g. clockwise 2b, about a pivot axis 2c.

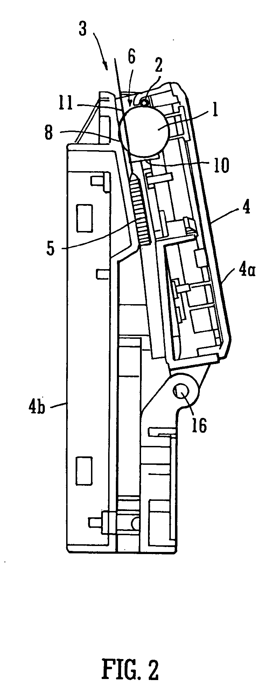

Fig.2 shows a coin validation system 3 (the coin validation parts of which have been omitted for clarity) including a coin receiving device 4. This is preferably part of a much larger coin receiving device, for example, a coin operated device, a coin counting device or an amusement device which uses coins in its operation. Coins 5 generally follow a route from the coin entrance 6 along a coin path 7 that goes between a wall 8 and a hanging mass 1. The coin path 7 is preferably slot-shaped. The hanging mass 1 includes a pivot 2 with its axis substantially parallel to the wall 8. The hanging mass 1 is arranged so that it hangs in the coin path 7 and can swing from the pivot 2 away from the wall 8 when coins 5 travel along the coin path 7.

Gravity acts to bias the hanging mass 1 toward the wall 8 and hence when a coin 5 passes along the coin path 7 the hanging mass 1 is deflected away from the wall 8, absorbing some of the kinetic energy of the coin 5 and deflecting it toward the wall 8 such that when the coin has passed the hanging mass it is following a stable path flat against the wall 8. Preventing a bouncing or tilting motion of the coin 5 is desirable as it allows the coin validation system 3 to sense and validate the coin 5 reliably and accurately.

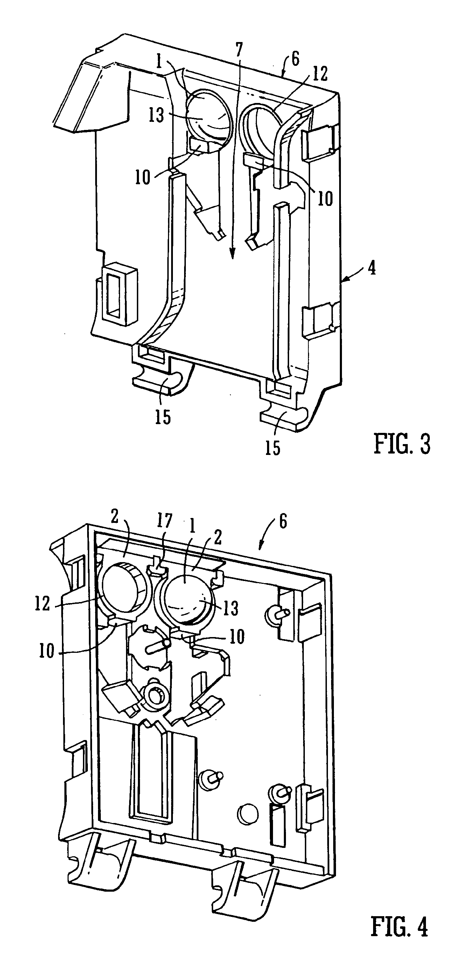

Fig.3 and fig.4 show a part 4a of a coin receiving device 4, in this instance one which utilises two hanging masses. The wall 8 is not shown as this is provided by a second part 4b of the coin receiving device 4. In fig.3 the coin entrance 6 and coin path 7 are clearly shown, with the hanging mass 1 protruding into the coin path 7. In fig.4 a rear view corresponding to fig.3 shows the pivot 2 of the hanging mass 1.

The pivot 2 is located clear of the coin path 7 and so is less likely to come into contact with dirt entering the coin entrance 6. Furthermore it can be seen from fig.3 and fig.4 that the pivot 2 may be shielded from the coin path 7.

Referring again to fig.1 the hanging mass 1 may include a coin deflecting portion 9 and a coin retaining portion 10. The coin deflecting portion 9 performs the function of stabilising the coin 5 and the coin retaining portion 10 performs the function of preventing the coin 5 from being fraudulently withdrawn. For instance a string 11 or similar may be attached to the coin 5 with the aim of fraudulently withdrawing the coin 5 from the coin receiving device 4. An example of such an arrangement can be seen in fig.2 with the coin 5 in a stable position flat against the wall 8 having passed the hanging mass 1. It is clear that withdrawal of the coin 5 will be prevented by the blocking action of the coin retaining portion 10.

The hanging mass 1 should be close enough to the wall 8 to prevent coins 5 from passing by the coin deflecting portion 9 without being stabilised, and also to ensure that coins 5 are not able to return past the coin retaining portion 10. This is especially important in the case of thin coins. Preferably the coin deflecting portion 9 and/or the coin retaining portion 10 rest against the wall 8 when no coin 5 is present in the coin path 7.

As shown in fig.1 the hanging mass 1 includes a frame 12 and an embedded mass 13. The embedded mass 13 includes the coin deflecting portion 9, and the frame 12 includes the coin retaining portion 10 and the pivot 2. The frame 12 holds the embedded mass 13.

This enables the hanging mass 1 to be manufactured in several parts, and thus different materials can be used to gain the best properties for each part. For instance the frame 12 may be made of materials that are able to be made easily in a complex shape and have low friction. The embedded mass 13 may be made of a low friction material, and it may be made of a wear resistant material. The material for the embedded mass 13 may also be chosen for its density in order to ensure that the force applied by the hanging mass 1 to the coin 5 efficiently deflects it into the required place. These considerations are harder to satisfy if the hanging mass 1 is constructed from a single material as, for instance, it may be hard to find a material that is sufficiently wear resistant and also easy to form into a complex shape.

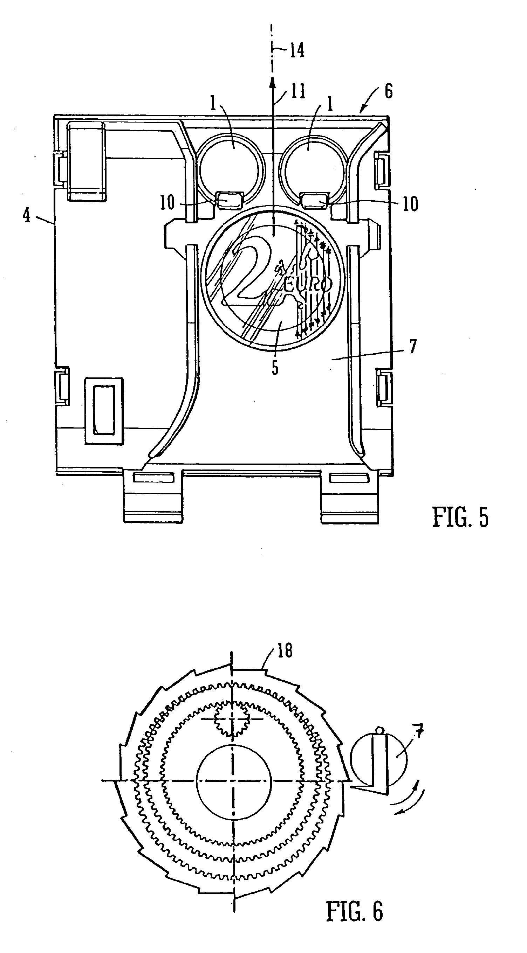

Fig.5 shows a coin 5 on the coin path 7 of a coin receiving device 4. The embodiment shown has two hanging masses 1 placed on each side of a centre-line 14 of the coin path 7. It can be seen that if a string 11 attached to the coin 5 was used in an attempt to fraudulently withdraw the coin 5 then this would be prevented by the action of the coin retaining portions 10, the action of which would be similar to that shown in fig.1. from a different viewpoint. If one of the hanging masses 1 was not working efficiently, then the remaining one would be sufficient to prevent withdrawal of the coin 5. Furthermore, the strategy of having hanging masses 1 on either side of the centre-line 14 of the coin path 7 has the effect that the string 11 cannot impair the operation of the hanging masses 1.

As shown in figs 2 to 5, part 4a of the coin receiving device 4 can be pivotally connected to part 4b by hinges 15 that pivot about an axis 16, so that it can be opened easily to access stuck coins or for maintenance of the stabilization device. The hanging mass 1 can be removed easily for replacement, cleaning or general maintenance by unhooking it from the supporting lugs 17 shown in fig 4. As the hanging mass 1 is retained by the frame 12 which is pivotally connected to part 4a by means of the pivot 2, there is no danger of the hanging mass 1 becoming stuck within a cage or lost when the parts 4a, 4b are opened to access stuck coins.

The present invention has been described in relation to embodiments using a hanging mass 1 with a spherical coin deflecting portion 9. However alternative shapes may be used, including other curved shapes, or inclined planes. Additionally although the wall 8 of fig.1 appears flat, there is no such limitation on the shape or form of the wall 8 as its function is to prepare the coin 5 for operation of later parts the coin validation system 3, and thus the wall shape and form should be chosen to suit the coin validation system 3 used. Furthermore although the above embodiment refers mainly to two hanging masses 7, any number of hanging masses 7 could in fact be used.

The hanging mass of the above invention may be used in a coin receiving device, or it may be used in other devices such as car safety belt systems. For example, the hanging mass has applications in locks where spherical elements are displaced within guides. The advantages in performance and reliability, especially in a dirty environment are not limited to coin receiving devices, locks or car safety belts, but may find other uses as well.

For example fig.6 shows an embodiment of a hanging mass used in a car safety belt system. The gear 18 shown is of a conventional design, and it can be seen that a hanging mass 7 can be used to prevent movement of the gear 18 and hence the seat belt during vehicle breaking, deceleration or impact. During normal driving the hanging mass 7 hangs freely from the pivot 2, and during deceleration the hanging mass 7 swings forward due to inertia, and engages with the gear 18, thus stopping it rotating. This system provides the advantage that dirt is not able to accumulate over time and impair the operation of the device, as can be the case with known systems incorporating a sphere in a cage or complex gear systems which can be slowed through the build up of dirt.

## Claims

1. A device for receiving coins comprising:
a coin path,
a wall, and
a hanging mass,
the hanging mass having a pivot with an axis arranged substantially parallel to the wall.

2. A device as claimed in claim 1, wherein the hanging mass has a profile including a coin deflecting portion on an upper side and a coin retaining member on a lower side.

3. A device as claimed in claim 2, wherein the deflecting portion is a has a curved profile.

4. A device as claimed in claim 3, wherein the curved profile includes a portion of a sphere.

5. A device as claimed in any of claims 2 to 4, wherein the hanging mass includes a bracket and an embedded mass.

6. A device as claimed in claim 7, wherein the embedded mass includes the coin deflecting portion, and the bracket includes the pivot and the coin retaining portion.

7. A device as claimed in claim 5 or 6, wherein the embedded mass is a spherical body.

8. A device as claimed in any preceding claim comprising a hanging mass on either side of a centre line of the coin path.

9. A coin stabilisation device for use in a coin receiving apparatus in which a coin travels along a coin path, the coin stabilisation device comprising:
a mass arranged to engage a face of a coin as the coin travels along the coin path in order to urge the coin into contact with a guide surface of the coin path,
wherein the mass is suspended from a pivot and is displaceable about the pivot to allow the coin to continue along the coin path.

10. A hanging mass comprising:
a pivot, and
a spherical body portion which is retained within a frame.

11. A hanging mass as claimed in claim 10, wherein the frame includes two lugs which extend in opposite directions and provide bearing surfaces to form the pivot such that the body portion is arranged within the frame so as to be suspended from the pivot in use.

12. A hanging mass as claimed in claim 10 or 11, wherein the frame comprises a ring of material that extends around the spherical body portion in a plane that is parallel to and includes the pivot axis.

13. A hanging mass as claimed in claim 10, 11 or 12, wherein the frame includes a blocking member presenting a surface which extends in a direction substantially orthogonal to the pivot axis and the plane of the ring-like frame.
